# EUROPEAN PATENT APPLICATION

(11) **EP 4 788 064 A1**
(43) Date of publication of application: **05.08.2026**
(21) Application number: 23958264.6
(22) Date of filing: 08.11.2023
(51) Int. Cl.: H05B 47/17, B60Q 3/85

(54) **LIGHTING CONTROL DEVICE, LIGHTING DEVICE, AND LIGHTING CONTROL METHOD**

(71) Applicant: Panasonic Intellectual Property Management Co., Ltd., Kadoma-shi, Osaka 571-0057 (JP)
(72) Inventor: MYOJIN, Fuminori, Osaka 571-0057 (JP)
(74) Representative: Eisenführ Speiser
(86) International application number: PCT/JP2023/040232
(87) International publication number: WO 2025/099862

(57) **Abstract**

A lighting control device controls a light source unit provided at a position corresponding to at least one seat or a cabin of a mobile body, and includes a processor that acquires input information that is an input from the one or more seats or the cabin. The processor has at least a first mode for causing the light source unit to emit light in a light emission pattern corresponding to the input information as a notification device for causing a crew of the mobile body to recognize contents of the input, and a second mode for causing the light source unit to emit light using a set light emission pattern as lighting, the processor being configured to switch between the first mode and the second mode.

## Description

### TECHNICAL FIELD

The present disclosure relates to a lighting control device that controls a light source unit disposed corresponding to a seat or a cabin of a mobile body, a lighting device, and a lighting control method.

### BACKGROUND ART

Lighting devices have been conventionally installed in moving bodies to be used to provide passengers with comfortable light environment by illuminating seats or cabins. For example, PTL 1 discloses a lighting system for providing comfortable light environment for a passenger during sleep. The lighting system includes a lighting device, a time setting unit, and a controller.

### Citation List

### Patent Literature

PTL 1: Japanese Patent No. 6876976

### SUMMARY OF THE INVENTION

The present disclosure provides a lighting control device that enables a lighting device used for providing light environment for a seat or a cabin to be also used for notification to a crew.

The lighting control device in the present disclosure controls a light source unit provided at a position corresponding to at least one seat or a cabin of a mobile body, and includes a processor that acquires input information that is an input from the one or more seats or the cabin. The processor has at least a first mode for causing the light source unit to emit light in a light emission pattern corresponding to the input information as a notification device for causing a crew of the mobile body to recognize contents of the input, and a second mode for causing the light source unit to emit light using a set light emission pattern as lighting, the processor being configured to switch between the first mode and the second mode.

A lighting control method in the present disclosure is used to control a light source unit provided at a position corresponding to at least one seat or a cabin of a mobile body, the lighting control method including: acquiring an input of the one or more seats or the cabin; switching at least between a first mode for controlling a light emission pattern of the light source unit to allow a crew of the mobile body to recognize information regarding the input from a user in response to the input from the user and a second mode for controlling the light source unit with a light emission pattern set to be restricted; and controlling the light source unit according to a switching result.

The lighting control device according to the present disclosure is effective in reducing a workload of a crew who checks states and expression of intention of passengers.

### BRIEF DESCRIPTION OF THE DRAWINGS

Fig. 1 is a block diagram illustrating a lighting device according to a first exemplary embodiment.
Fig. 2 is an external view of the lighting device according to the first exemplary embodiment.
Fig. 3 is a flowchart of switching to a first mode according to flight information in the lighting device according to the first exemplary embodiment.
Fig. 4 is a flowchart of switching to the first mode according to an input from a sensor in the lighting device according to the first exemplary embodiment.
Fig. 5 is a flowchart of switching to the first mode according to an input from a passenger interface in the lighting device according to the first exemplary embodiment.
Fig. 6 is a flowchart of switching to the first mode according to an input from a crew interface in the lighting device according to the first exemplary embodiment.

### DESCRIPTION OF EMBODIMENT

Hereinafter, exemplary embodiments will be described with reference to the drawings. The exemplary embodiments described below illustrate comprehensive or specific examples. The exemplary embodiments below show numerical values, shapes, materials, components, placement positions and connection forms of the components, steps, the order of the steps, and the like, which are just examples and are not intended to limit the present disclosure. The components in the exemplary embodiments below include a component without being described in an independent claim representing the most superordinate concept, the component being described as an optional component.

Each of the drawings is a schematic diagram and is not necessarily exactly illustrated. Each of the drawings shows a substantially identical configuration designated by the same reference sign, and duplicated description may not be described or may be simplified.

### (Background to the Invention)

An aircraft has a large ratio of the number of passengers to the number of crew members, thus causing a large workload per crew member. In particular, checking a state and expression of intention of a passenger, such as checking of safety or necessity of meals and amenities, requires oral or visual checking for each passenger, and thus is considered to be burdensome work.

For this problem, when a notification device for notifying the crew of the state and expression of intention of the passenger is separately provided for each seat and cabin, it is considered that visibility is improved to enable reduction in a burden of the crew when the crew checks. However, separately providing the notification device for notifying the crew of the state and expression of intention of the passenger as described above occupies a limited space of the aircraft and also leads to an increase in weight of the aircraft, and thus may adversely affect fuel efficiency of the aircraft. Thus, the inventors of the present invention have found a lighting control device that enables a lighting device used for providing spatial atmosphere of a seat and a cabin, and comfortable light environment for a passenger in normal times, to be also used as a device for allowing a crew to recognize a state and expression of intention of the passenger.

The lighting control device provided corresponding to a seat or a cabin in the present disclosure includes at least a first mode for causing a light source unit to emit light in a light emission pattern according to a state or intention decision of a passenger and a second mode for causing the light source unit to emit light in a light emission pattern used for spatial atmosphere of the seat or the cabin as with a normal lighting device. The lighting control device can control light emission of the light source unit by switching between the first mode and the second mode in a scene where a crew needs to check a state or expression of intention of a passenger.

That is, the lighting device used to provide the light environment of the seat or the cabin can also be used as the notification device for the crew without separately providing a notification device used only to notify the crew. Consequently, the crew can visually determine the state and expression of intention of the passenger based on the light emission pattern of the light source unit, thus enabling reduction in a burden generated during oral or visual checking.

### (First exemplary embodiment)

### [1-1. Configuration]

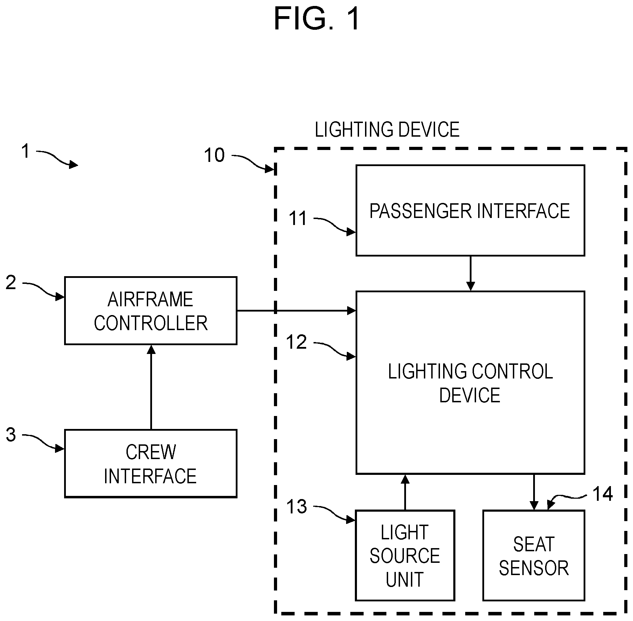

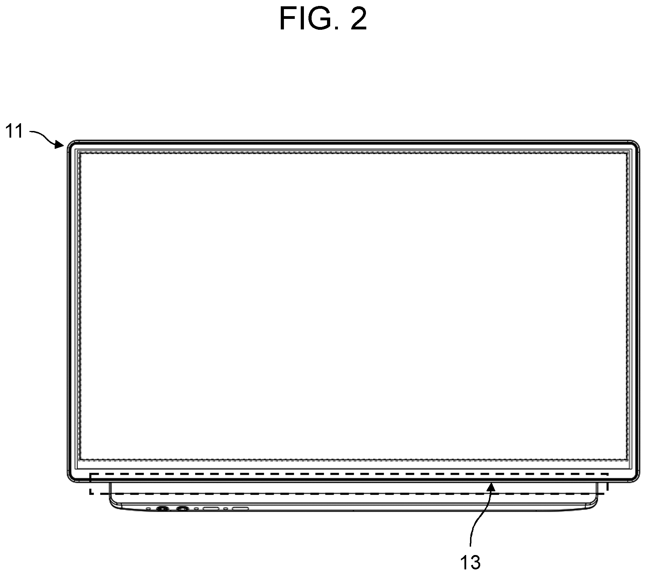

Hereinafter, a lighting system according to an exemplary embodiment of the present disclosure will be described with reference to Figs. 1 and 2. Fig. 1 is a block diagram illustrating the lighting system according to the exemplary embodiment. Fig. 2 is an external view of a lighting device used in the lighting system according to the exemplary embodiment.

Lighting system 1 according to the present exemplary embodiment is installed inside a mobile body such as an aircraft. As illustrated in Fig. 1, lighting system 1 includes airframe controller 2, crew interface 3 connected to the airframe controller, and lighting device 10. A plurality of lighting devices 10 is provided corresponding to each seat or a cabin of the mobile body such as the aircraft.

Airframe controller 2 is hardware and software used for controlling equipment of the mobile body such as the aircraft. Airframe controller 2 is a computer system including a recording device such as a memory and a processor, for example. Airframe controller 2 transmits an input of a seat belt sign lighting switch from a pilot, and flight information such as information regarding a flight phase, a current position of the aircraft, and time (a departure time, a comparison between an arrival time and a current time, and the like) to lighting control device 12 described later. Here, the flight information is acquired from airframe controller 2, and is related to operation of the mobile body such as the aircraft.

The flight phase is here represented by a plurality of phases from when a person gets on the aircraft with intention to fly to when the person gets off the aircraft. Examples of each phase in the flight phase include standing (STANDING), taxiing (TAXI), take-off (TAKE OFF), climb (CLIMB), cruise (CRUISE), descent (DESCENT), approach (APPROACH), and landing (LANDING). The standing is a phase in which the aircraft is stationary at a gate or the like of an airport after taxiing or arrival, for example. The taxiing is a phase in which the aircraft self-travels on a surface of the airport before takeoff or after landing. The take-off is a phase from an application for the take-off until the aircraft ascends from a runway elevation to an altitude of 35 feet. The climb is a phase until the aircraft climbs to a set cruising altitude after the take-off. The cruise is a phase in which the aircraft horizontally flies after reaching the cruising altitude until a start of descent to a destination. The descent is a phase in which the aircraft descends from a cruise state to an approach altitude toward the destination. The approach is a phase from the approach altitude until the aircraft enters a flare maneuver position described below. The landing is a phase during which the aircraft enters the flare maneuver position where the aircraft raises its nose to reduce a rate of descent and then stops on a runway. The flight phase in the present disclosure is an example, and is not limited to a combination of the phases of the flight phase of the present disclosure, and may be a combination without including the phase of the approach. The flight phase may include some phases among the flight phases of the present disclosure. Then, phases not exemplified in the present disclosure may be included.

The seat belt sign lighting switch is operated from a cockpit or the like of the aircraft according to determination of the pilot to ensure safety of the passenger at least in any phase of the flight phases.

Crew interface 3 is hardware and software for displaying information to a crew of the mobile body and receiving an operation from the crew. For example, crew interface 3 is a touch panel provided forward or backward in the cabin of the mobile body. Crew interface 3 receives an input related to a providing status of an in-flight service, such as start of a food delivery operation, start of safety check, and start of passenger announcement (PA) from the crew. Crew interface 3 further transmits the received input related to the providing status of the in-flight service to lighting control device 12 described below.

As illustrated in Fig. 2, lighting device 10 includes passenger interface 11, lighting control device 12 (not illustrated), light source unit 13, and seat sensor 14 (not illustrated). Passenger interface 11 and light source unit 13 are provided on a back surface of a seat or a wall surface in front of a corresponding seat. Light source unit 13 is installed in a lower part of a back surface of a monitor of passenger interface 11, and illuminates the seat from between the monitor and a mechanism that is provided in the lower part of the monitor and into which connectors can be inserted (light is emitted in a part surrounded by a dotted line in the drawing). This configuration provides a passenger with light environment as indirect lighting. Besides the installation position described above, the light source unit in the lighting device may be installed at a position in a front surface or a periphery of the monitor. Although lighting control device 12 and light source unit 13 are formed integrally in the lighting device according to the present exemplary embodiment, they may be provided separately. For example, light source unit 13 may be lighting provided on a construction material such as a side wall or a ceiling material, and is not limited to these configurations as long as it is provided at a position corresponding to the seat or the cabin. Alternatively, light source unit 13 may be connected to lighting control device 12 through airframe controller 2 instead of being directly connected to lighting control device 12. This configuration causes the lighting control device 12 to transmit an operation signal of light source unit 13 to airframe controller 2, thereby causing airframe controller 2 to control light source unit 13.

Passenger interface 11 is a touch panel installed in the cabin as illustrated in Fig. 2, for example. Passenger interface 11 is used when an in-flight entertainment system is used, and receives an input from a passenger using the touch panel. Passenger interface 11 is not limited to a touch panel, and may be any device configured to receive an input from a passenger, such as a remote controller provided on a seat or a switch provided in a seat periphery such as an armrest.

Lighting control device 12 is software and hardware that control operations such as turning on and off, dimming, and toning of light source unit 13 by transmitting an LED control signal to light source unit 13. Lighting control device 12 is a computer system including a recording device such as a memory and a processor, for example. Lighting control device 12 is connected to equipment provided in a corresponding cabin or seat periphery including passenger interface 11, light source unit 13, and seat sensor 14, and transmits and receives information. Consequently, lighting control device 12 may provide an in-flight entertainment system to the passenger. Lighting control device 12 is also connected to airframe controller 2 to transmit and receive information.

Lighting control device 12 controls light source unit 13 by switching between the first mode and the second mode. The switching between modes of lighting control device 12 is not limited to these two modes. Hereinafter, the first mode and the second mode will be described in detail.

The first mode causes lighting control device 12 to control light source unit 13 as a notification device that notifies the crew of a state and intention of a passenger for each seat and cabin. Specifically, lighting control device 12 first receives a signal from a facility provided in a corresponding cabin or seat periphery, the signal including a signal acquired by seat sensor 14 and an operation signal transmitted from passenger interface 11. Next, lighting control device 12 acquires a light emission pattern corresponding to the received signal from the memory, and controls light source unit 13 according to the acquired light emission pattern. Here, the signal from the facility provided in the cabin or the seat periphery includes information on the state and intention of the passenger. Thus, the state and intention of the passenger can be grasped by recognizing a correspondence relationship between the signal and the light emission pattern grasped by the crew for the light emission pattern visually recognized by the crew in light source unit 13 corresponding to the cabin or the seat. A specific example will be described in [1-2. Operation] described later.

Then, lighting control device 12 in the second mode controls light source unit 13 as lighting for providing light environment comfortable for a user and for spatial atmosphere of the cabin and the seat. Specifically, lighting control device 12 in the second mode reads out a preset light emission pattern from a recording device such as a memory, or receive the light emission pattern from airframe controller 2, thereby controlling light source unit 13 to have the acquired light emission pattern. The light emission pattern may be set to a desired light emission pattern by a passenger using passenger interface 11, for example. The light emission pattern may be set for each airline company, and the second mode includes a pattern preset to change according to conditions such as a time period. Alternatively, crew interface 3 may be operated by the crew to set a light emission pattern designated by the crew for spatial atmosphere or the like. The light emission pattern set in the first mode is not limited to this as long as the light emission pattern is set for providing light environment such as spatial atmosphere.

Then, lighting control device 12 is switched to the first mode when receiving a specific signal, and controls the light source unit to have a light emission pattern for notifying the crew of the intention and state of the passenger. The specific signal is here specifically an operation signal from passenger interface 11, an operation signal transmitted from airframe controller 2 or crew interface 3, a signal acquired by seat sensor 14 described later, or the like. The specific signal is not limited to this as long as it is a signal input to the lighting control device. An example of detailed switching operation will be described in [1-2. Operation] described later.

Here, the light emission pattern is a lighting manner of the light source unit including turning on, turning off, hue, lightness, saturation, and a blinking cycle. Then, the blinking cycle includes a cycle of change when brightness changes gradually. Elements of the light emission pattern are not limited thereto. The control of light source unit 13 performed by lighting control device 12 is not limited to direct operation by transmitting an operation signal to light source unit 13. For example, light source unit 13 may be controlled using airframe controller 2 by transmitting an operation signal to airframe controller 2.

Light source unit 13 is a light emitting module using a light emitting diode (LED) as a light emitting element and an LED controller, for example, and emits white light, for example. The light emitting element may be an LED element of a so-called surface mount device (SMD) type. Then, light source unit 13 includes a plurality of light emitting elements different in emission color (color temperature) from each other, and lighting control device 12 is a light emitting module configured to perform color adjustment control and light adjustment control by transmitting a control signal to light source unit 13. The light emitting module may perform the light adjustment control and the color adjustment control on the LED by adjusting the amount of power supply of an external power source unit, but is not limited thereto.

Seat sensor 14 is provided in each seat periphery of a passenger. Examples of seat sensor 14 include a camera provided in passenger interface 11, a seat belt fastened/unfastened sensor configured to acquire information regarding whether the seat belt is fastened or unfastened, and a sensor that detects inclination of a monitor or a seat. Information acquired by seat sensor 14 is transmitted to lighting control device 12, and can be used for controlling passenger interface 11, light source unit 13, and the like. Alternatively, the seat sensor may be connected to lighting control device 12 through airframe controller 2 instead of being directly connected thereto. This configuration causes lighting control device 12 to receive information transmitted from airframe controller 2 as information input from a corresponding seat and acquired by seat sensor 14. Seat sensor 14 is not limited to this as long as a state of the seat, the cabin, and the periphery thereof can be acquired, and may be a sensor or the like that acquires opening and closing of a storage shelf for storing baggage above the seat.

### [1-2. Operation]

Operation of lighting device 10 configured as described above will be described below.

### [1-2-1. Change of light emission pattern based on flight information]

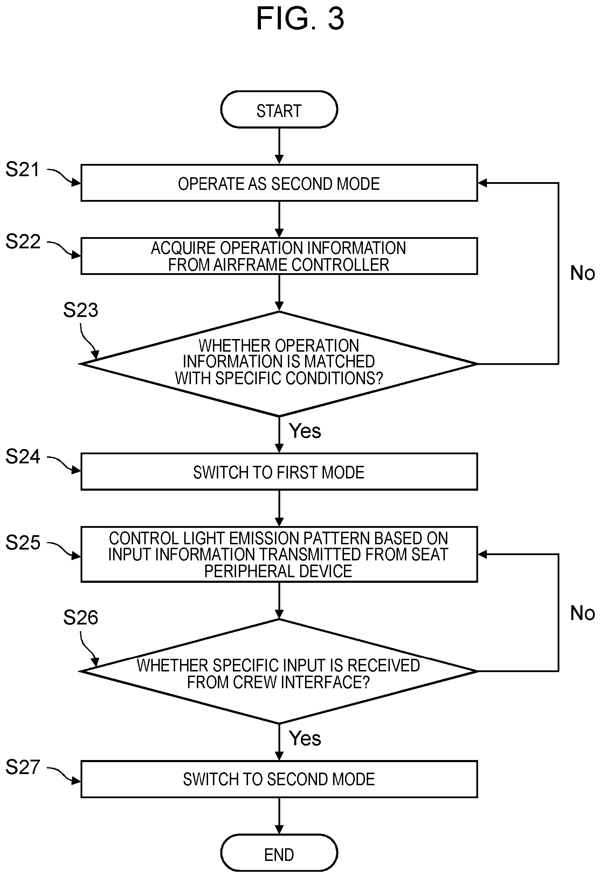

Fig. 3 is a flowchart illustrating operation when lighting device 10 switches between the first mode and the second mode based on flight information. Hereinafter, an example of the operation of lighting device 10 will be described in which a crew checks wearing of a seat belt for safety check of a passenger for takeoff, landing, or the like of an aircraft.

First, after turning on a power supply of lighting device 10, lighting control device 12 operates as the second mode (S21). For example, information regarding emission color and color temperature (example of the light emission pattern) set for each airline is received from airframe controller 2, and light source unit 13 is controlled to emit light with the emission color and the color temperature set by the airline. Then, the second mode enables the passenger to change own light environment to a more comfortable light environment by adjusting the emission color and the color temperature to appropriate emission color and color temperature using passenger interface 11 after boarding. Additionally, setting made by a national air agency or the like such as turning off light may be prioritized over setting of emission color and color temperature set by passengers themselves at night time or the like not to disturb sleep of the passengers in the cabin and near passenger seats.

Next, lighting control device 12 acquires flight information (S22). For example, a flight phase and presence or absence of lighting of a seat belt wearing sign may be acquired as the flight information to check safety of passengers.

Next, lighting control device 12 determines whether the flight information acquired in S22 satisfies specific conditions (S23). Here, the specific conditions are related to the flight information for determining whether check work of the crew using lighting device 10 has been started. Specifically, timing of performing a safety check after completion of boarding of passengers may be determined by the flight information in a boarding scene of an aircraft. For example, when the crew performs the safety check after completion of boarding of passengers in a scene before departure of the aircraft, the flight phase switches to the taxiing. Then, the pilot turns on the seat belt wearing sign at this time to ensure safety of the passengers. Thus, lighting control device 12 can determine that the safety check of the passengers has been started by the crew as the in-flight service by determining whether the flight phase is the standing or the taxiing, and whether turning on of the seat belt wearing sign is input. When the flight information satisfies the specific conditions, that is, when it is determined that the safety check has been started, processing proceeds to S24.

When the flight information satisfies predetermined conditions in S23, lighting control device 12 switches to the first mode (S24). For example, when it is determined that the safety check of the passengers has been started, lighting control device 12 switches to the first mode.

Next, lighting control device 12 operates in the first mode, and controls the light emission pattern of light source unit 13 based on input information (S25).

For example, the crew visually checks whether a passenger wears a seat belt for the safety check of passengers for each cabin or seat before the airplane takes off. At this time, lighting control device 12 in the first mode may acquire a result of whether the seat belt is fastened or unfastened, the result being detected by the seat belt fastened/unfastened sensor serving as seat sensor 14, as the input information. The result of whether the seat belt is fastened or unfastened may be directly acquired as a signal of the seat belt fastened/unfastened sensor by lighting control device 12, or may be acquired an alert signal transmitted from the sensor or airframe controller 2 connected to the sensor, for example. Thus, the lighting control device 12 determines whether the seat belt is fastened or unfastened by acquiring a signal of the seat belt fastened/unfastened sensor.

When the seat belt corresponding to the cabin or the passenger seat is unfastened, lighting control device 12 acquires a light emission pattern from the memory, the light emission pattern indicating that the seat belt of the passenger is unfastened. The light emission pattern here is set in advance by an airframe manufacturer or an airline company, for example, to enable the crew to determine whether the seat belt is fastened or unfastened by viewing the light source unit. For example, when the seat belt is unfastened, lighting control device 12 in the first mode may cause the light source unit to blink at a constant cycle with emission color set to red. In contrast, when it is determined that the passenger at the corresponding passenger seat or seat wears the seat belt, or the passenger wears the seat belt according to an instruction from the crew or the like, lighting control device 12 may control light source unit 13 to emit light with the emission color and the color temperature during operation in the second mode in S21.

As described above, when lighting control device 12 is operated in the first mode, the light emission pattern of light source unit 13 varies depending on whether the seat belt is fastened or unfastened. Consequently, the crew can recognize a passenger with the seat belt unfastened by checking whether the light emission pattern is for an unfastened seat belt (blinking in red) during safety check, so that the safety check can be performed more efficiently than when only the metal fitting of the seat belt itself is visually checked.

Finally, when it is determined that a specific input indicating completion of the safety check of the passengers has been acquired from crew interface 3 as an input related to a providing status of the in-flight service, lighting control device 12 ends the operation in the first mode and switches to the second mode (S26, S27).

The above description has shown that the lighting device used for providing light environment of a seat or a cabin can also be used as the notification device for the crew by switching between the first mode and the second mode in lighting control device 12. This configuration enables the crew to visually determine whether the seat belt is fastened or unfastened as a state of the passenger based on the light emission pattern of the light source unit, thus enabling reduction in a burden on the crew, generated during oral or visual checking performed by the crew.

Additionally, an example has been described in which lighting control device 12 can be switched to the first mode based on the flight information when the crew checks whether the seat belt is fastened or unfastened for the safety check of the passengers before take-off or landing of the aircraft, for example. As a result, lighting control device 12 enables the light source unit to operate as a notification device after determining timing at which work of checking states and expression of intention of passengers is provided according to a flight status of the aircraft, thus enabling reduction in a burden generated during the check work performed by the crew.

As described above, when different inputs are used as an input used for switching to the first mode and an input used for ending the operation in the first mode, a time zone can be more appropriately determined, the time zone requiring the crew to check states and expression of intention of passengers using lighting control device 12. Consequently, a function as lighting for spatial atmosphere and a function as the notification device to the crew can be more appropriately switched and used in light source unit 13.

Although the light emission pattern when the seat belt is fastened and the light emission pattern when the seat belt is unfastened are examples, and light source unit 13 is controlled to have the emission color and the color temperature when the operation is performed in the second mode for the seat belt unfastened in S21 in the above description, the light emission pattern is not limited thereto. The light emission patterns in the first mode and the second mode may be different in at least any one of a blinking period, hue, lightness, saturation, luminance, and color arrangement during light emission, and the crew may recognize whether the lighting is utilized as the notification device from the light emission pattern. Changing the light emission pattern as described above enables the crew to clearly distinguish whether the light source unit is controlled as the lighting device or the notification device.

For example, an aircraft manufacturer, an airline company, or the like may preliminarily set an appropriate light emission pattern for the seat belt unfastened, the appropriate light emission pattern being different from a light emission pattern for the seat belt fastened, and being set as a notification to the crew. Whether the first mode uses the light emission pattern set in the second mode can be set for each airline company.

The above description has shown that lighting control device 12 in the first mode causes light source unit 13 to emit light in a light emission pattern corresponding to information acquired by seat sensor 14 of the seat or the cabin. Consequently, the crew can read a state of the passenger from the light emission pattern, so that the check work can be performed more smoothly.

Although whether the flight phase and turning on of the seat belt wearing sign are input is used as the flight information for switching to the first mode in the above description, the flight information is not limited thereto. For example, the switching to the first mode may be determined based on one piece of information such as only the flight phase or only the input of the turning on of the seat belt wearing sign, or may be determined based on a combination of a plurality of pieces of flight information such as a combination of information regarding time indicating flight status of the aircraft (departure time, comparison between estimated arrival time and current time, or the like) and the flight phase. Then, the flight phase for determining the safety check may use a phase of the standing, a phase of the descent because the safety check is determined before the aircraft prepares for landing, or the like. Besides this, another phase may be used as long as the safety check is performed in the other phase. Alternatively, information indicating timing when the crew starts providing a service, such as the start of safety check, may be directly acquired from airframe controller 2 or the like as the flight information.

Here, the input from the crew interface is used as a signal indicating completion of the operation in the first mode. Besides this, another input may be used. For example, lighting control device 12 may determine timing of the switching by using the flight information such as switching of the flight phase and a lighting status of the seat belt wearing sign. Alternatively, an input indicating completion of the safety check may be acquired from passenger interface 11, and information regarding the seat belt that is fastened or unfastened may be acquired from seat sensor 14.

Then, the first mode may be switched to the second mode by determining that the safety check has been completed when the flight phase is switched to the climb, the cruise, or the like.

### [1-2-2. Change of light emission pattern based on sensor input]

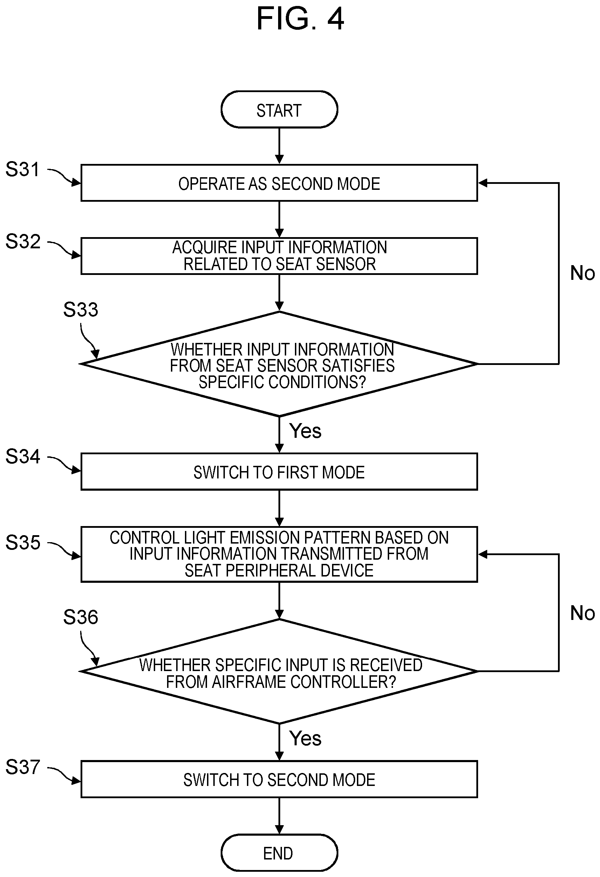

Fig. 4 is a flowchart of operation when lighting device 10 switches a control mode according to an input from seat sensor 14. Hereinafter, while details of contents duplicated with [1-2-1. Change of light emission pattern based on flight information] are eliminated, different parts will be described with an example of operation of the lighting system for notifying the crew whether the seat belt of a passenger is fastened or unfastened.

### S31 is similar to S21 in Fig. 3.

Lighting control device 12 acquires a result of whether the seat belt is fastened or unfastened, the result being detected by the seat belt fastened/unfastened sensor serving as seat sensor 14, as input information related to seat sensor 14 (S32). For example, lighting control device 12 acquires an alert signal as input information, the alert signal being output by the seat belt fastened/unfastened sensor of a seat when a seat belt of a passenger is unfastened in the seat.

Next, lighting control device 12 determines whether the input information related to seat sensor 14 satisfies specific conditions (S33). For example, whether the seat belt is unfastened is determined by the seat belt fastened/unfastened sensor. When the input information related to seat sensor 14 satisfies the specific conditions, that is, when the seat belt is determined to be unfastened by receiving an alert signal of the seat belt sensor, processing proceeds to S34.

When the input information related to seat sensor 14 satisfies predetermined conditions in S33, lighting control device 12 is switched to the first mode (S34). For example, when it is determined that the seat belt is unfastened, lighting control device 12 switches to the first mode.

Next, lighting control device 12 operates in the first mode, and controls the light emission pattern of light source unit 13 based on input information (S35). For example, lighting control device 12 may cause light source unit 13 to have an emission color of red and blink at a constant speed as a light emission pattern for notifying the crew of an unfastened seat belt.

Alternatively, the input information may be acquired from seat sensor 14 again instead of using the input information identical to that acquired in S32. For example, when a signal of the seat belt fastened/unfastened sensor is acquired again as the input information and the seat belt fastened/unfastened sensor determines that the seat belt of the passenger is fastened, lighting control device 12 switches to the second mode and controls light source unit 13 with the light emission pattern set in the second mode.

Finally, when it is determined that a specific input indicating completion of the safety check of the passenger is acquired from the airframe controller, lighting control device 12 ends the operation in the first mode and switches to the second mode (S36, S37). Here, the specific input indicating completion of the safety check of the passenger may be flight information such as switching of the flight phase acquired from the airframe controller, and may be information indicating that the flight phase has been switched to the takeoff or the descent, for example.

An example has been described above in which lighting control device 12 can be switched to the first mode based on the information related to the sensor installed in the seat or the cabin when the crew checks whether the seat belt is fastened or unfastened for the safety check of the passengers before take-off or landing of the aircraft. Consequently, the lighting control device can switch the lighting device to the notification device according to a state or expression of intention of the passenger.

Here, the input from the airframe controller is used as a signal indicating completion of the operation in the first mode. Besides this, another input may be used. For example, as indicated by [1-2-1. Change of light emission pattern based on flight information], an input from crew interface 3 is available, switching may be determined by an input from passenger interface 11, or information regarding whether a seat belt is fastened or unfastened from seat sensor 14 may be used.

Although the seat belt fastened/unfastened sensor is used as seat sensor 14 in the example described above, the first mode and the second mode may be switched using another sensor. For example, a camera may be used as seat sensor 14 to check physical conditions of a passenger. When the physical conditions of the passenger analyzed from an image of the passenger acquired by the camera are determined to be bad in this configuration, the mode may be switched to the first mode to emit light in a color (e.g., red for poor physical conditions) matching the physical conditions of the passenger.

### [1-2-3. Change of light emission pattern according to input from passenger interface]

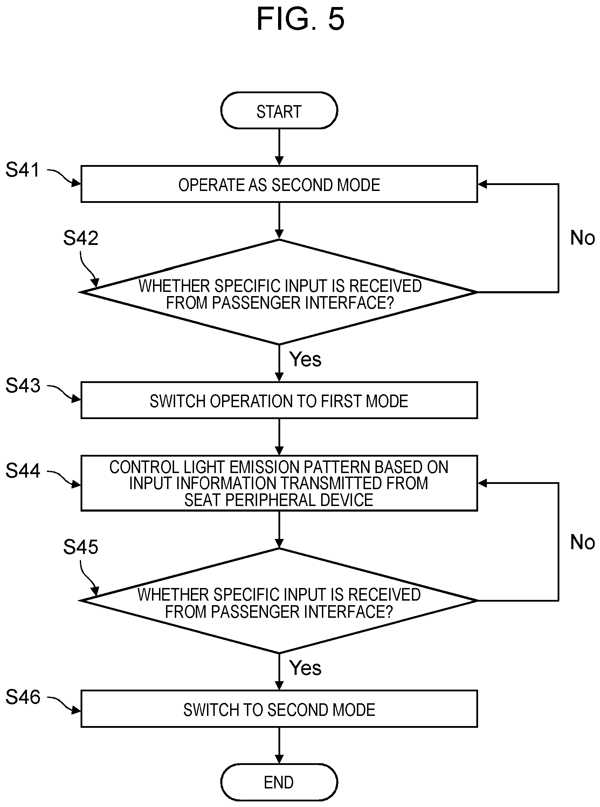

Fig. 5 is a flowchart of operation when lighting device 10 switches the control mode according to an input from passenger interface 11. Hereinafter, while details of contents duplicated with [1-2-1. Change of light emission pattern based on flight information] are eliminated, different parts will be described with an example of operation of lighting device 10 when a passenger calls a crew using passenger interface 11.

### S41 is similar to S21 in Fig. 3.

Next, lighting control device 12 determines whether a specific input from passenger interface 11 for a service requested by a passenger has been received (S42), where the specific input is from passenger interface 11 and indicates that an in-flight service is requested by the passenger. For example, lighting control device 12 determines whether an input from a passenger using a crew call button as a service request of the passenger has been received. Then, when it is determined that the input using the crew call button has been received, processing proceeds to S43.

When receiving the specific input related to the service request of the passenger from passenger interface 11 in S42, lighting control device 12 switches to the first mode (S43). For example, when it is determined that the input from the passenger using the crew call button has been received, lighting control device 1 switches to the first mode.

Next, lighting control device 12 operates in the first mode, and controls the light emission pattern of light source unit 13 based on input information (S44). For example, lighting control device 12 causes light source unit 13 to have an emission color of red and blink at a constant speed as a light emission pattern for notifying the crew of a call from a passenger.

Finally, when it is determined that a specific input from passenger interface 11 has been received, lighting control device 12 ends the operation in the first mode and switches to the second mode (S45, S46). Here, the specific input indicates that a response to the service request of the passenger is completed.

An example has been described above in which lighting control device 12 can be switched to the first mode based on the input from passenger interface 11 when the passenger calls the crew or requests a service to the crew. Consequently, the crew can determine a passenger having requested the service by visually recognizing lighting near the passenger, and a passenger can be more easily recognized, the passenger having input calling or a request for a service to the passenger interface.

Here, the input from passenger interface 11 is used as a signal indicating completion of the operation in the first mode. Besides this, another input may be used. For example, an input from crew interface 3 is available, the input indicating that a response to a service request of a passenger has been completed. Then, the signal indicating completion of the operation in the first mode may be flight information such as a flight phase and a lighting status of the seat belt sign, or may be information indicating completion of a response based on seat sensor 14 such as a camera.

The crew call is an example of a service request from a passenger, and the service request is not limited thereto. For example, the service request from the passenger may be a request for an amenity, a meal, or the like. Then, the light emission pattern in S44 may be set for each of contents of the service request, required amenities, and meals. Consequently, the crew can visually determine the contents of the corresponding service request based on the light emission pattern. For example, a light emission pattern corresponding to a color of a beverage, such as brown for coffee and light blue for water, may be used to request the beverage.

### [1-2-4. Change of light emission pattern according to input from crew interface]

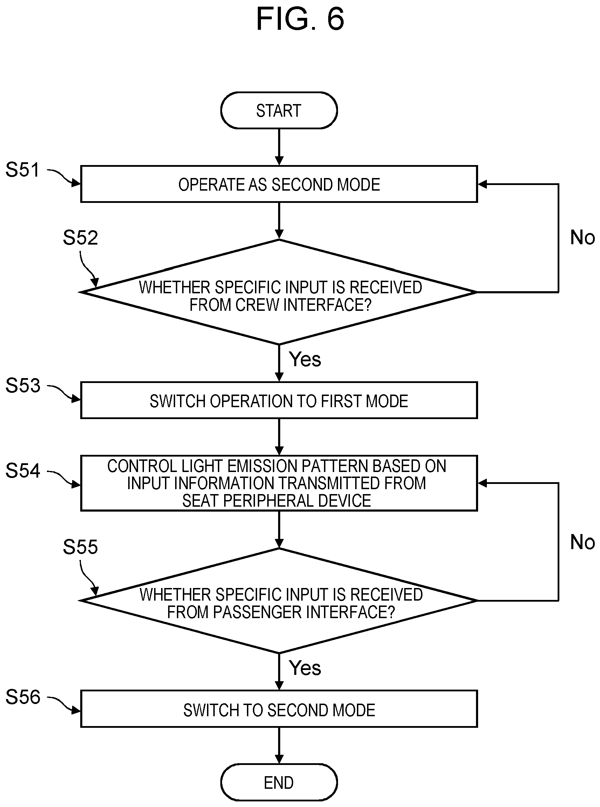

Fig. 6 is a flowchart of operation when lighting device 10 switches the control mode according to an input from crew interface 3. Hereinafter, while details of contents duplicated with [1-2-1. Change of light emission pattern based on flight information] are eliminated, different parts will be described with an example of operation of the lighting system when a crew checks a meal menu selected by a passenger during meal delivery work.

### S51 is similar to S21 in Fig. 3.

Next, lighting control device 12 determines whether a specific input related to a service to be provided by the crew from crew interface 3 has been received (S52). Here, the specific input is from crew interface 3 for determining whether check work using lighting device 10 has been started by the crew. For example, when starting to serve a meal, the crew inputs an indication of the start of serving from crew interface 3. Then, airframe controller 2 notifies lighting control device 12 of crew interface 3 having received the input indicating the start of serving. When crew interface 3 receives the input indicating the start of serving, processing proceeds to S53.

When receiving the specific input from crew interface 3 in S52, lighting control device 12 switches to the first mode (S53). For example, when determining that the crew has input the start of serving, lighting control device 12 switches to the first mode.

Next, lighting control device 12 operates in the first mode, and controls the light emission pattern of light source unit 13 based on input information (S54). For example, when receiving an input indicating the start of serving from the crew, passenger interface 11 may display an option indicating FISH and an option indicating BEEF as meal menus selectable by a passenger. This configuration allows the passenger to further input a desired option from the displayed meal menu using passenger interface 11. At this time, lighting control device 12 receives the meal menu selected by the passenger as input information. Then, lighting control device 12 controls light source unit 13 in the first mode with a preset light emission pattern corresponding to the option (input information) of the selected meal menu. Examples of the light emission pattern include blue blinking for the FISH, yellow blinking for the BEEF, and switching to turning off light for no selection. When light source unit 13 is controlled with a light emission pattern corresponding to each option of the meal menu to be served and a light emission pattern indicating that the passenger has not selected the meal menu as described above, the crew can visually recognize an intention of the passenger regarding the meal menu with the light emission pattern. Thus, time and effort for the crew to check the meal menu verbally to each passenger can be reduced.

Finally, when it is determined that a specific input from passenger interface 11 has been received, lighting control device 12 ends the operation in the first mode and switches to the second mode (S45, S46). Here, the specific input indicates that the service provided by the crew is completed. For example, the specific input for the serving indicates that the meal menu has been provided to the passenger.

An example has been described above in which lighting control device 12 can be switched to the first mode based on the input from crew interface 3 when the crew delivers a meal. Consequently, lighting near a passenger can be used as a notification device when the crew determines timing requiring check work related to a state or expression of intention of a passenger.

Lighting control device 12 also can determine whether providing a service having an option selectable by a passenger has been started by using input from the crew interface, and can notify the crew with a light emission pattern corresponding to the input of the option received from the passenger through passenger interface 11. Consequently, the crew can visually recognize the option input by the passenger from the light emission pattern, thus enabling reduction in a burden of check work of the option requested by the passenger.

Then, timing to start providing the service having the option selectable by the passenger may be determined from the flight information or the like instead of determination based on the input from the crew interface. For example, the timing to start providing the service may be determined using a comparison between meal provision time and current time, a lighting status of the seat belt sign, and the like as the flight information.

Here, the input from passenger interface 11 is used as a signal indicating completion of the operation in the first mode. Besides this, another input may be used. For example, an input from crew interface 3 indicating completion of the service provided by the crew may be used.

Then, the signal indicating completion of the operation in the first mode may be flight information such as a flight phase and a lighting status of the seat belt sign, or may be information indicating completion of a response based on seat sensor 14 such as a camera.

Examples of the input indicating completion of the service provided by the crew include an input indicating completion of the service provided for each seat or each seat group, and an input indicating completion of the service provided for the whole.

### [1-3. Others]

Light source unit 13 has been described in the present exemplary embodiment, the light source unit having been installed near a monitor corresponding to a seat of a passenger, such as a lower part of passenger interface 11 having a monitor operated by the passenger. As described above, when a light source unit of lighting installed at a position allowing the crew to easily visually recognize the light source unit is used as a notification device by using lighting control device 12, the crew can more easily check a state and expression of intention of a passenger.

### (Other exemplary embodiments)

As described above, the above exemplary embodiment has been described as an example of the technique disclosed in the present application. Besides this, the technique in the present disclosure can also be applied to an exemplary embodiment in which change, replacement, addition, elimination, or the like is appropriately made to the above exemplary embodiment.

Then, a new exemplary embodiment can be made by combining each component described in the above exemplary embodiment. The first exemplary embodiment has been described with the flight information that is used as specific conditions for determining timing at which the safety check of the passenger is started, the specific conditions being described in 1-2-1, for example. However, a combination of the check work of the crew using the lighting device and the specific conditions for determining timing at which the check work is started is not limited to the combinations shown in 1-2-1, 1-2-2, 1-2-3, 1-2-4, and thus a plurality of conditions may be combined. Here, the conditions and the check work described above may be combined to form a different combination.

For example, the start of the serving may be determined based on the flight information, or the start of the safety check of the passenger may be determined based on an input from the crew interface. When the start of serving is determined based on the flight information, the start of serving may be determined using information regarding time, such as comparison between current time and a schedule of lunch, information indicating that the seat belt wearing sign has not been input, or a combination of these pieces of information, as the flight information, for example. That is, examples of the information to be used for switching to the first mode include information enabling determination that the crew has started providing a service, and information enabling determination that the passenger has requested the service.

Then, the check work of the crew using the lighting device is not limited to the example of the above exemplary embodiment as long as the crew can check intention of the passenger and a state of the seat, the cabin, and the periphery thereof by a light emission pattern. For example, the lighting device may be used in work of checking whether a storage shelf above a seat is closed using a sensor or the like that acquires opening or closing of the storage shelf above the seat, the storage shelf being configured to store baggage.

### INDUSTRIAL APPLICABILITY

The present disclosure can be applied to a lighting control device that notifies a crew of a state or intention of a passenger in a mobile body.

### REFERENCE MARKS IN THE DRAWINGS

- 2: airframe controller
- 3: crew interface
- 10: lighting device
- 11: passenger interface
- 12: lighting control device
- 13: light source unit
- 14: seat sensor

## Claims

1. A lighting control device configured to control a light source unit provided at a position corresponding to at least one seat or a cabin of a mobile body, the lighting control device comprising:
a processor that acquires input information that is an input from the at least one seat or the cabin,
the processor having at least a first mode for causing the light source unit to emit light in a light emission pattern corresponding to the input information as a notification device for causing a crew of the mobile body to recognize contents of the input, and a second mode for causing the light source unit to emit light using a set light emission pattern as lighting, and
the processor being configured to switch between the first mode and the second mode.

2. The lighting control device according to Claim 1, wherein
the mobile body is an aircraft, and
the processor being configured to:
further acquire flight information that is information acquired from an airframe controller of the aircraft; and
switch to the first mode based on the flight information.

3. The lighting control device according to Claim 1, wherein
the processor being configured to:
further acquire information related to a sensor installed in the at least one seat or the cabin; and
switch to the first mode based on the information related to the sensor.

4. The lighting control device according to Claim 1, wherein
the processor being configured to:
further acquire an input from a passenger interface operable by a passenger in the at least one seat or the cabin; and
switch to the first mode based on the input from the passenger interface.

5. The lighting control device according to Claim 1, wherein
the processor being configured to:
further acquire an input from a crew interface operated by the crew; and
switch to the first mode based on the input from the crew interface.

6. The lighting control device according to Claim 5, wherein
the input from the crew interface is an input indicating a start of providing a service having options selectable by the passenger in the at least one seat or the cabin, and
the input information is related to the options from a passenger interface operable by the passenger.

7. The lighting control device according to Claim 1, wherein
the mobile body is an aircraft,
the processor switches to the first mode based on first information, and ends operation in the first mode based on second information,
the first information and the second information include at least one of flight information acquired from an airframe controller of the aircraft, information on a sensor installed in the at least one seat or the cabin, an input from a passenger interface, and an input from a crew interface, and
the first information and the second information are at least partially different from each other.

8. The lighting control device according to Claim 1, wherein the light emission pattern in the first mode and the light emission pattern in the second mode are different in at least one of a blinking period, hue, lightness, saturation, luminance, and color arrangement during light emission.

9. The lighting control device according to Claim 1, wherein the input information is based on a sensor installed in the at least one seat or the cabin.

10. The lighting control device according to Claim 1, wherein the switching to the first mode is performed based on any one of information indicating that a crew has started a service and information indicating that a passenger has requested a service.

11. The lighting control device according to Claim 10, wherein the service of the crew includes at least one of serving a meal, checking safety of a passenger, and checking opening and closing of a storage shelf.

12. The lighting control device according to Claim 10, wherein the service requested by the passenger includes any one of calling of a crew, an amenity request, and a meal request.

13. A lighting device comprising:
the lighting control device according to any one of Claims 1 to 12;
a passenger interface that includes at least a monitor and that is operable by a passenger; and
the light source unit connected to the passenger interface,
wherein the at least one seat or the cabin is located at a position near the monitor.

14. A lighting control method used to control a light source unit provided at a position corresponding to at least one seat or a cabin of a mobile body at least, the lighting control method comprising:
acquiring an input of the at least one seat or the cabin;
switching at least between a first mode for controlling a light emission pattern of the light source unit to allow a crew of the mobile body to recognize information regarding the input from a user in response to the input from the user and a second mode for controlling the light source unit with a set light emission pattern; and
controlling the light source unit according to a switching result.
